# EUROPÄISCHE PATENTSCHRIFT

(11) **EP 2 655 889 B1**
(45) Veröffentlichungstag und Bekanntmachung des Hinweises auf die Patenterteilung: **01.04.2015**
(21) Anmeldenummer: 12706579.5
(22) Anmeldetag: 29.02.2012
(51) Int. Cl.: F04D 17/12, F04D 29/08, F04D 29/10, F04D 29/42, F01D 11/04, F01D 25/24, F16J 15/14, F16J 15/00

(54) **TURBOMASCHINENGEHÄUSE MIT DURCH SPERRGAS ABGEDICHTETER TEILFUGE (BZW. FLANSCHVERBINDUNG)**
TURBOMACHINE CASING WITH FLANGE CONNECTION SEALED BY BARRIER GAS
CARTER DE TURBOMACHINE AVEC RACCORD À BRIDES ÉTANCHÉIFIÉ PAR GAZ DE BARRAGE

(30) Priorität: 03.03.2011 DE 102011005026
(43) Veröffentlichungstag der Anmeldung: 30.10.2013
(73) Patentinhaber: Siemens Aktiengesellschaft, 80333 München (DE)
(72) Erfinder: ZACHARIAS, Wolfgang, 47198 Duisburg (DE)
(86) Internationale Anmeldenummer: PCT/EP2012/053421
(87) Internationale Veröffentlichungsnummer: WO 2012/117016

(56) Entgegenhaltungen:
- DE-A1- 2 239 314
- JP-A- 54 079 312
- JP-A- 59 194 004

## Beschreibung

Die Erfindung betrifft ein teilbares Gehäuse für eine Fluidmaschine, insbesondere für einen Turboverdichter, wie beispielsweise einen Einwellenturboverdichter.

Verdichter bzw. fluidekomprimierende Vorrichtungen werden in verschiedenen Industriebereichen für verschiedene Anwendungen genutzt, bei denen es um eine Kompression oder Verdichtung von Fluiden, im Speziellen (Prozess-)Gasen wie Chlor-, Cracked-, Nass- oder Koksgas, Stickstoff, Luft, Sauerstoff oder Kohlendioxid, geht.

Bekannte Beispiele hierfür sind Turboverdichter, beispielsweise ein Einwellenturboverdichter, in chemischen oder petrochemischen, industriellen Anlagen, beispielsweise in einer Gaspipeline-Verdichterstation, für eine Luftzerlegung oder in einer Fluid Catalytic Cracking (FCC) Anlage.

Ein solcher Turboverdichter, ein Einwellenturboverdichter (kurz im Folgenden auch nur Einwellenverdichter) der Firma Siemens mit der Bezeichnung STC-SH, ist aus http://www.energy.siemens.com/hq/de/verdichtung-expansion-ventilation/turboverdichter/einwellenverdichter/stc-sh.htm (erhältlich am 15.02.2011) bekannt.

Bei einem solchen - in seiner Arbeitsweise kontinuierlich arbeitenden - Turboverdichter wird die Druckerhöhung (Verdichtung) des Fluids dadurch bewirkt, dass ein Drehimpuls des Fluids von Eintritt zu Austritt durch mindestens ein rotierendes, radial erstreckende Schaufeln aufweisendes Laufrad des Turboverdichters durch die Rotation von den Schaufeln erhöht wird. Hier steigen Druck und Temperatur des Fluids, während die relative (Strömungs-)Geschwindigkeit des Fluids in dem mindestens einen Laufrad bzw. Turbolaufrad sinkt.

Bei dem Einwellenturboverdichter sitzen meist mehrere beschaufelte Laufräder auf einer Rotorwelle, welche von einem (Verdichter-)Gehäuse umgeben ist. In bzw. an dem Gehäuse ist die Rotorwelle - relativ zu dem Gehäuse - drehbar gelagert.

Die Gehäuse sind meistens geschweißt. Für spezielle Zwecke, z. B. Anwendungen bei Tiefsttemperaturen (bis -190 °C), können sie aber auch aus beschaffungs- und fertigungstechnischen Gründen gegossen sein.

Eine horizontale Gehäuseteilung, welche das Gehäuse in eine obere Gehäusehälfte und eine über eine Teilfuge mit der oberen Gehäusehälfte verbundene untere Gehäusehälfte teilt, ermöglicht einen einfachen Zugang zu Innenkomponenten des Verdichters, wie das mindestens eine Laufrad, durch ein Abnehmen der oberen Gehäusehälfte.

Die Rotorwelle ist im Allgemeinen an seinen axialen Längsendbereichen jeweils mittels eines Lagers abgestützt, das - in bzw. im Bereich der Teilfuge - an dem Gehäuse oder an einem separaten Lagerbock abgestützt und in atmosphärischer Umgebung angesiedelt ist.

Die Lager sind eingerichtet, um Radialkräfte und/oder Axialkräfte aufzunehmen, die auf die Rotorwelle einwirken. Die Lager können bekannte Gleitlager, insbesondere Kippsegmentgleitlager, oder auch Magnetlager sein.

Im Inneren des Gehäuses eines solchen Turboverdichters liegen typischerweise thermodynamische Zustände vor (mit z.B. Zustandsparameter Prozessgas, Temperatur, Druck), die unterschiedlich zur atmosphärischen Umgebung sind, wodurch eine effiziente Abdichtung des Gehäuseinneren gegenüber der atmosphärischen Umgebung besonders wichtig ist.

Eine Abdichtung erfolgt im Bereich der Lager, wo die Rotorwelle gegen das Gehäuse abgedichtet ist, sodass hier das Innere des Gehäuses zur atmosphärischen Umgebung hin so gut wie gasdicht isoliert ist und ein Gasaustausch zwischen dem Inneren des Gehäuses und der atmosphärischen Umgebung so gut wie nicht stattfinden kann.

Eine solche Abdichtung der Rotorwelle gegen das Gehäuse wird herkömmlich mit einer Wellendichtung bewerkstelligt, beispielsweise eine Kohlenstoffring-, Bürsten- oder Labyrinthdichtung. Zur Erreichung bzw. Verbesserung einer Abdichtungsfunktion ist es bekannt, die Wellendichtung mit einem Sperrgassystem zu betreiben. Für das Sperrgassystem bzw. für eine Gassperre bei diesem System werden üblicherweise inerte Gase, wie Stickstoff, verwendet.

Eine solche Wellendichtung, eine Labyrinth Wellendichtung wie eine Saugdruck-Labyrinth Wellendichtung oder eine drei-Kammer-Labyrinth Wellendichtung, mit Sperrgassystem wird beispielsweise bei dem Einwellenturboverdichter STC-SH der Firma Siemens eingesetzt. Weitere Wellendichtungen betrieben mit einem Sperrgassystem bei einem Einwellenverdichter sind aus der EP 2 006 584 und der DE 10 2009 012 038 A1 bekannt. Eine andere Wellendichtung mit Sperrgassystem bei einer Rotorwelle, hier bei einer Pumpe, ist aus der DE 10 2005 015 212 A1 bekannt.

Die weitere Abdichtung des Turboverdichtergehäuses erfolgt in der horizontalen Teilfuge, d. h., an den Kontaktflächen der oberen und der unteren Gehäusehälfte.

Dabei muss die Teilfuge, insbesondere im Fall von einem horizontal geteilten Gehäuse eines Turboverdichters, unter allen Betriebsbedingungen des Turboverdichters eine genügende hohe Flächenpressung aufweisen, damit die Dichtfunktion gewährleistet ist.

Durch Toleranzen bei der Bearbeitung der Gehäuseteile und unregelmäßige Teilfugenkonturen, beispielsweise aus Oberflächenrauhigkeiten oder geometrische Unregelmäßigkeiten, sowie thermische Effekte, wie Verzug oder Materialverformungen, kann diese Forderung nach genügend hoher Flächenpressung oftmals nicht eingehalten werden.

Oberflächenrauhigkeiten und leichte Abweichungen im Toleranzbereich können durch Flüssigdichtmittel oder Dichtungspasten ausgeglichen werden. Geometrische Unregelmäßigkeiten, wie im Speziellen bei Konturen um einen Einlaufbereich und einen Spiralquerschnitt des Turboverdichters, werden in einigen Fällen durch eine Rundschnur in der Teilfuge ausgeglichen.

Bei einer Auswahl dieser Dichtmittel, d. h., der Flüssigdichtmittel, der Dichtungspasten und der Rundschnur, müssen Parameter, wie Prozessgasverträglichkeit, Druck oder Temperatur, beachtet werden.

Werden in einem Turboverdichter unterschiedliche Prozessgase, wie Chlor, Sauerstoff, Stickstoff oder Luft, mit unterschiedlichen Drücken und Temperaturen verdichtet, kann dies zu Konflikten bei den jeweils auf ein spezielles Anforderungsprofil (Prozessgas, Temperatur, Druck) hin ausgelegten Dichtmitteln bzw. bei deren Materialauswahl führen.

JP 59 194004 A offenbart ein teilbares Turbomaschinengehäuse mit einer Nut im Bereich der Teilfuge, wobei die Nut mit dem Sperrgas einer Wellendichtung versorgt wird.

Somit liegt der Erfindung die Aufgabe zugrunde, ein Gehäuse für eine Fluidmaschine, insbesondere für einen Turboverdichter, anzugeben, welches die Nachteile aus dem Stand der Technik verbessert, eine effiziente Abdichtung des Gehäuseinneren gegenüber der atmosphärischen Umgebung auch bei unterschiedlichen Arbeitsbedingungen der Fluidmaschine ermöglicht, einfach und kostengünstig zu realisieren und auch einfach und kostengünstig zu montieren ist.

Die Aufgabe wird durch ein teilbares Gehäuse für eine Fluidmaschine, insbesondere für einen Turboverdichter, wie beispielsweise einen Einwellenverdichter, mit den Merkmalen gemäß dem unabhängigen Patentanspruch gelöst.

Das teilbare Gehäuse umfasst zumindest ein erstes Gehäuseelement und ein mit dem ersten Gehäuseelement über eine Teilfuge verbundenes, zweites Gehäuseelement, beispielsweise ein (Gehäuse-)Oberteil sowie ein (Gehäuse-)Unterteil.

Solche Gehäuseteile werden üblicherweise über an den Gehäuseteilen angeordneten Flanschen, beispielsweise mittels einer Verschraubung, miteinander verbunden. An Verbundflächen bzw. Kontaktflächen solcher miteinander verbundenen bzw. verschraubten Flansche bzw. Gehäuseteilen ist die Teilfuge angeordnet bzw. ausgebildet. Meist sind das erste und das zweite Gehäuseelement ein Unterteil sowie ein auf dem Unterteil angeordnetes Oberteil - vergleichbar einem Deckel - , sodass die Teilfuge hier in der Regel horizontal verläuft (horizontale Teilfuge).

Das erste und/oder das zweite Gehäuseelement weist bzw. weisen im Bereich der Teilfuge mindestens eine

Nut sowie mindestens eine mit der mindestens einen Nut verbundene Gasversorgungsleitung oder Gasversorgungsanschluss auf. Unter Verwendung dieser mindestens einen Gasversorgungsleitung ist damit die mindestens eine Nut mit Gas versorgbar.

Es soll dabei unter einer Nut alle Formen von länglichen Vertiefungen oder Ausnehmungen - unabhängig von deren jeweiligen Querschnittsformen - verstanden werden. Wesentlich ist hierbei, dass eine solche - in dem ersten und/oder in dem zweiten Gehäuseelement im Bereich der Teilfuge - angeordnete bzw. eingebrachte Vertiefung bzw. Ausnehmung in Richtung zu der Teilfuge hin offen ist. Ein Boden der Vertiefung bzw. der Ausnehmung verläuft dabei in dem ersten und/oder zweiten Gehäuseelement.

Ein Nutquerschnitt der mindestens einen Nut kann dabei in Abhängigkeit eines Druckes und/oder einer Menge des in der mindestens einen Nut strömenden Gases bestimmt werden.

Bevorzugt lässt sich eine solche Nut durch ein spanendes Verfahren, wie ein Fräsverfahren, in das erste und/oder in das zweite Gehäuseelement einbringen. Auch können gegebenenfalls schon in dem ersten und/oder in dem zweiten Gehäuseelement vorhandene Vertiefungen, wie Freifräsungen oder Ansenkungen, beispielsweise aus Verschraubungen, - wie vorhanden oder weiterbearbeitet - verwendet werden, um daraus die Nut zu erzeugen.

Über diese mindestens eine Gasversorgungsleitung oder Gasversorgungsanschluss (beides nur als Gasversorgungsleitung bezeichnet), welche ebenfalls als Nut, als Bohrung oder Kanal o. ä. oder auch nur als einfache Öffnung, als einfacher Anschluss oder einfache Anschlussöffnung ausgeführt sein kann, lässt sich - bei Anschluss an ein Gassystem, beispielsweise an ein Sperrgassystem, beispielsweise für eine Wellendichtung, im Speziellen an eine Gassperre eines Sperrgassystems, - die mindestens eine Nut mit Gas, beispielsweise Sperrgas, versorgen. Vereinfacht ausgedrückt wird unter der Gasversorgungsleitung oder dem Gasversorgungsanschluss (beides nur als Gasversorgungsleitung bezeichnet) das Element verstanden, beispielsweise auch eine Nut, eine Öffnung, eine Bohrung, ein Kanal o.ä., über welches die Nut mit Gas versorgbar ist.

Dadurch lässt sich in der Teilfuge ein Sperrgassystem realisieren, welches das Gehäuse bzw. ein Gehäuseinneres über die Teilfuge gegenüber einer atmosphärischen Umgebung des Gehäuses abdichtet.

Anschaulich gesehen und vereinfacht ausgedrückt wird hierbei ein Abdichtprinzip einer mit einem Sperrgassystem betriebenen Wellendichtung auf die Teilfuge bzw. auf die Abdichtung der Teilfuge übertragen.

Von besonderem Vorteil erweist sich hierbei, dass ein bereits bei einer Wellendichtung vorhandenes Sperrgassystem genutzt werden kann, um - bei Anschluss der mindestens einen Gasversorgungsleitung/Gasversorgungsanschluss an dieses vorhandene Sperrgassystem und Versorgung der mindestens einen Nut mit (Sperr-)Gas - eine Sperrgasdichtung in der Teilfuge zu realisieren.

Hierbei wird in vorteilhafter Weise die Abdichtung über eine rein konstruktive Maßnahme bewerkstelligt, wodurch zusätzliche Dichtmittel, wie Flüssigdichtmittel, Dichtungspasten oder Rundschnüre in der Teilfuge zur Abdichtung derselben nicht mehr notwendig sind.

Insbesondere bei unterschiedlichen Prozessumgebungen, wie bei der Verdichtung verschiedener Prozessgase, kann es nicht mehr zum Konflikt bei der Auswahl des Dichtmittels bzw. bei dessen Materialauswahl kommen.

Die konstruktive Lösung stellt darüber hinaus - bei Kopplung an ein vorhandenes Sperrgassystem einer Wellendichtung - ein in sich geschlossenes System dar. Übergänge zwischen verschiedenen Dichtsystemen bei einem Gehäuse einer Fluidmaschine bzw. einem Turboverdichter, wie die Abdichtung der Teilfuge und die Abdichtung einer Aufnahmebohrung für die Wellendichtung, beispielsweise für eine Labyrinthdichtung, sind nicht mehr vorhanden.

Erfindungsgemäß weist bzw. weisen das erste und/oder das zweite Gehäuseelement im Bereich der Teilfuge eine weitere Nut sowie mindestens eine mit der weiteren Nut verbundene Gasversorgungsleitung oder Gasversorgungsanschluss auf, wodurch die weitere Nut zusätzlich mit einem Spülgas versorgbar ist.

Bevorzugte Weiterbildungen der Erfindung ergeben sich auch aus den abhängigen Ansprüchen.

In einer bevorzugten Weiterbildung sind bzw. ist das erste Gehäuseelement ein (Gehäuse-)Unterteil und/oder das zweite Gehäuseelement ein (Gehäuse-)Oberteil, beispielsweise ein Deckel. An beiden Teilen können Flansche, über welche die beiden Teile miteinander verschraubt werden können, ausgebildet sein.

Bevorzugt ist bzw. sind die mindestens eine Nut und/oder die mit der mindestens einen Nut verbundene Gasversorgungsleitung, beispielsweise eine Bohrung, eine Nut, eine Öffnung oder ein Kanal o. ä., in dem (Gehäuse-)Unterteil angeordnet. Alternativ kann die mindestens eine Nut und/oder die mit der mindestens einen Nut verbundene Gasversorgungsleitung/Gasversorgungsanschluss auch im (Gehäuse-)Oberteil angeordnet sein.

Des Weiteren kann vorgesehen sein, dass das Gas, mit welchem die mindestens eine Nut versorgbar ist, ein Sperrgas, insbesondere ein Inertgas, wie Stickstoff, ist. Auch andere gasförmige Fluide, wie Sauerstoff oder Luft, sind möglich. Zweckmäßig ist es, das Gas in Abhängigkeit des Prozessgases der Fluidmaschine bzw. des Turboverdichters zu wählen.

Ein Druck dieses Gases in der mindestens einen Nut sollte bevorzugt so eingestellt werden, dass sich eine (Leckage-)Strömung des Gases über die Teilfuge nach außen einstellen lässt. Demzufolge sollte der Druck des Gases höher als ein Druck der atmosphärischen Umgebung des Gehäuses gewählt werden.

Weiterhin ist nach einer bevorzugten Weiterbildung vorgesehen, dass die mindestens eine Nut mit einer weiteren Gasversorgungsleitung oder Gasversorgungsanschluss verbunden ist, wodurch die mindestens eine Nut zusätzlich mit einem, insbesondere trockenen, Spülgas, insbesondere einem Inertgas, wie Stickstoff, versorgbar ist. Dadurch kann eine Feuchtigkeitsansammlung, insbesondere vor Inbetriebnahme der Fluidmaschine, im Bereich der Teilfuge vermieden werden.

Darüber hinaus können weitere mit der mindestens einen Nut oder mit der mindestens einen Gasversorgungsleitung/Gasversorgungsanschluss gekoppelte Gasversorgungsleitungen, Zu- und/oder Ableitungen, beispielsweise in Form von Kammern, umlaufende oder teilweise umlaufende Nuten, Bohrungen oder Kanälen o. ä., zur Zu- und/oder Ableitung von Fluiden, insbesondere Gasen, in bzw. aus der mindestens einen Nut vorgesehen sein.

Besonders bevorzugt kann hier eine Nut, welche mit der mindestens einen Nut oder mit der mindestens einen Gasversorgungsleitung/Gasversorgungsanschluss der mindestens einen Nut gekoppelt ist, vorgesehen werden, welche als Drossel oder Blende ausgestaltet ist, um Druck und/oder Menge des Gases zu kontrollieren, zu regulieren, einzustellen und/oder anzupassen.

Ferner kann bevorzugt vorgesehen sein, dass die mindestens eine Nut unter Verwendung der mindestens einen mit der mindestens einen Nut verbundenen Gasversorgungsleitung/Gasversorgungsanschluss mit einem Sperrgassystem für eine Wellendichtung, beispielsweise für eine Labyrinth Wellendichtung wie eine Saugdruck-Labyrinth Wellendichtung oder eine drei-Kammer-Labyrinth Wellendichtung, verbunden ist. Dabei kann vorgesehen sein, dass die mindestens eine Nut über die mindestens eine Gasversorgungsleitung bzw. -anschluss mit einer Luftsperre des Sperrgassystems angekoppelt ist, wodurch die mindestens eine Nut mit dem Sperrgas des Sperrgassystems der Wellendichtung bzw. Labyrinth Wellendichtung versorgt wird.

Entsprechend dem Prinzip des Sperrgassystems bei der Wellendichtung kann eine Ableitung des Gases aus der mindestens einen Nut vorgesehen sein. So kann die Ableitung des Gases aus der mindestens einen Nut über die Teilfuge nach außen erfolgen. D. h., (Sperr-)Gas tritt aus der mindestens einen Nut über die Teilfuge nach außen, d. h., in eine atmosphärische Umgebung des Gehäuses, aus. Weiter kann hier auch vorgesehen sein, dass das Gas über die Teilfuge auch in Richtung nach innen, beispielsweise in eine zur Entsorgung vorgesehene, bezüglich der mindestens einen Nut in der Teilfuge weiter innen liegende Entsorgungsnut, austritt.

Bevorzugt kann bzw. können die weitere Nut und/oder die mit der weiteren Nut verbundene Zu- und/oder Ableitung in demselben Gehäuseelement wie die mindestens eine Nut, insbesondere zusammen mit der mindestens einen Nut in einem Gehäuseunterteil, angeordnet sein.

Die weitere Nut kann dabei - gegenüber der mindestens einen Nut in Bezug auf ein Inneres des Gehäuses - weiter innen liegend angeordnet sein.

Auch hier kann ein an sich beliebiger Nutquerschnitt der mindestens einen Nut in Abhängigkeit eines Druckes und/oder einer Menge eines in der weiteren Nut strömenden Gases bestimmt werden.

Diese weitere Nut kann als Entsorgungsnut ausgebildet sein bzw. eingesetzt werden, wobei diese dann über die mit der weiteren Nut gekoppelte Zu- und/oder Ableitung an ein Entsorgungssystem, beispielsweise an das Entsorgungssystem des Sperrgassystems für die Wellendichtung, angeschlossen werden kann. Solche Entsorgungssysteme bei Sperrgassystemen von Wellendichtungen sind bekannt, beispielsweise eine Aufbereitung, eine Abgaskolonne, ein Abfackeln oder ein "Safe-Location".

In dieser Entsorgungsnut kann dann ein Gemisch aus - von der mindestens einen Nut über die Teilfuge einströmenden - (Sperr-)Gas und - von dem Gehäuseinneren über die Teilfuge einströmenden - Prozessgas (Leckagegas) gesammelt und (ab-) transportiert werden.

Um diese Strömungen in die Entsorgungsnut zu realisieren, wird bevorzugt ein Druck des Gasgemisches in der Entsorgungsnut derart eingestellt, dass dieser sowohl geringer als der Druck des Gases in der mindestens einen Nut (Sperrgas) als auch der des Prozessgases ist.

Auch hier kann eine Nut, welche mit der Entsorgungsnut oder mit der Zu-/Ableitung der Entsorgungsnut gekoppelt ist, vorgesehen werden, um - als Drossel oder Blende ausgestaltet - den Druck und/oder die Menge des Gasesgemisches zu kontrollieren, zu regulieren, einzustellen und/oder anzupassen.

Erfindungsgemäß ist vorgegehen, die weitere Nut mit einer weiteren Gasversorgungsleitung oder Gasversorgungsanschluss zu verbinden, wodurch die weitere Nut zusätzlich mit einem, insbesondere trockenen, Spülgas, insbesondere einem Inertgas, wie Stickstoff, versorgbar ist. Hierdurch können Feuchtigkeitsansammlungen, insbesondere im Bereich der Teilfuge, vermieden sowie eine gerichtete bzw. gewollte Gasströmung in der weiteren Nut erzeugt werden.

Weiter kann bevorzugt vorgesehen sein, dass die Wellendichtung, beispielsweise eine Labyrinth Wellendichtung wie eine Saugdruck-Labyrinth Wellendichtung oder eine drei-Kammer-Labyrinth Wellendichtung, eine Rotorwelle der Fluidmaschine, insbesondere eines Turboverdichters bzw. eines Einwellenverdichters, gegenüber dem Gehäuse und/oder einem Lager, insbesondere einem Gleit- oder Magnetlager, der Rotorwelle, insbesondere unter Verwendung eines Sperrgassystems, abdichtet.

Nach einer besonders bevorzugten Weiterbildung weist ein Turboverdichter bzw. Einwellenverdichter ein im Vorigen beschriebenes, erfindungsgemäßes Gehäuse mit Teilfugenabdichtung auf. Dabei ist eine Rotorwelle des Einwellenverdichters in dem Gehäuse gelagert. Die Rotorwelle ist unter Verwendung einer Wellendichtung mit Sperrgassystem, beispielsweise eine Labyrinth Wellendichtung wie eine Saugdruck-Labyrinth Wellendichtung oder eine drei-Kammer-Labyrinth Wellendichtung, gegenüber dem Gehäuse abgedichtet. Die mindestens eine Nut ist unter Verwendung der mindestens einen mit der mindestens einen Nut verbundenen Gasversorgungsleitung bzw. -anschluss mit einer Luftsperre dieses Sperrgassystems für die Wellendichtung verbunden.

Darüber hinaus kann hier vorgesehen sein, dass die weitere Nut über die mit der weiteren Nut verbundene Zu- und/oder Ableitung an ein Entsorgungssystem dieses Sperrgassystems für die Wellendichtung gekoppelt ist.

Somit ist hier das Abdichtprinzip der Wellendichtung auf die Abdichtung der Teilfuge des Gehäuses des Turboverdichters erweitert bzw. auch dort realisiert.

Hierbei können Drücke der Fluide in folgender Kombination realisiert sein: Druck in der weiteren Nut bzw. Entsorgungsnut kleiner als der minimale Druck im Gehäuse, Sperrgasdruck in der mindestens einen Nut größer als der Druck in der weiteren Nut bzw. Entsorgungsnut sowie auch größer als der Druck in der atmosphärischen Umgebung des Gehäuses, beispielsweise minimaler Druck im Gehäuse 3 bar, Sperrgasdruck in der mindestens einen Nut 1,8 bar, Druck in der weiteren Nut bzw. Entsorgungsnut 1,5 bar.

In Figuren ist ein Ausführungsbeispiel der Erfindung dargestellt, welche im Weiteren näher erläutert werden.

Es zeigen
- FIG 1: einen Einwellenverdichter mit Teilfugenabdichtung am Gehäuse des Einwellenverdichters gemäß einem Ausführungsbeispiel;

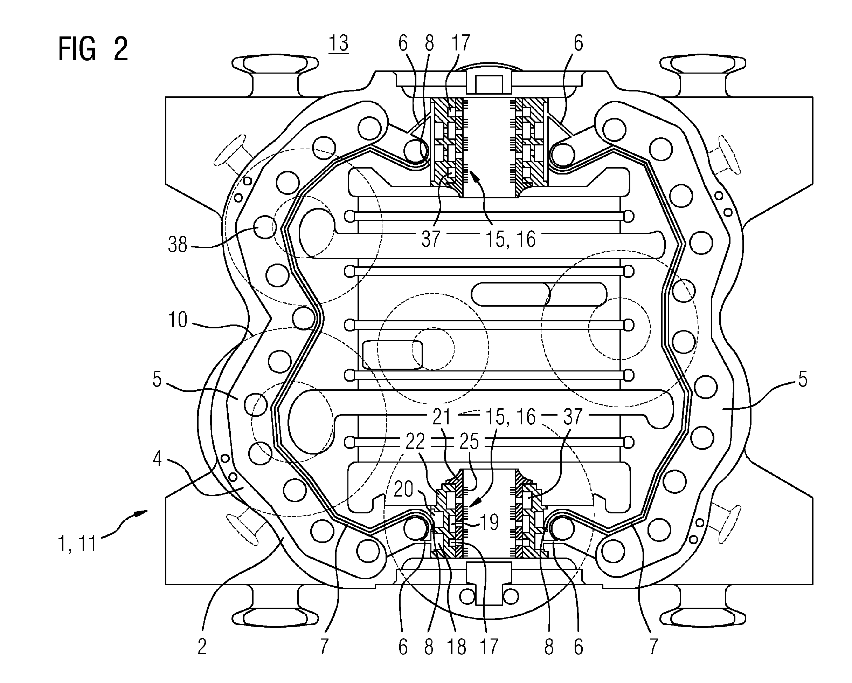

- FIG 2: eine Sicht auf die Teilfuge des Einwellenverdichters nach FIG 1;
- FIG 3: eine Prinzipskizze der Teilfuge des Einwellenverdichters nach FIG 1, welche die Teilfugenabdichtung bei dem Einwellenverdichter verdeutlicht.

Ausführungsbeispiel: Teilfugenabdichtung bei einem Einwellenverdichter

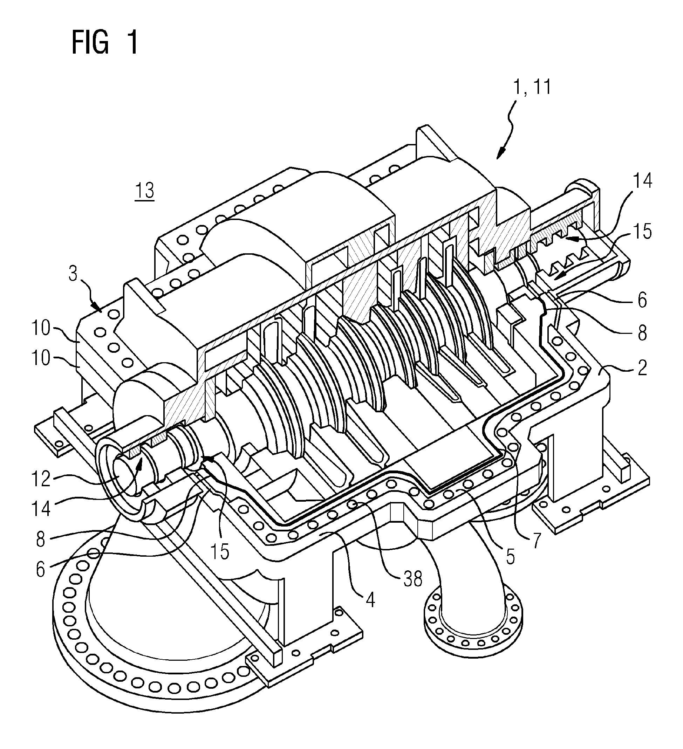

FIG 1 zeigt einen Einwellenverdichter, wie er beispeisweise in seiner Grundkonfiguration dem Einwellenverdichter (11) der Firma Siemens mit der Bezeichnung STC-SH entspricht.

Wie es aus den FIG 1 ersichtlich ist, weist dieser Einwellenverdichter 1 ein horizontal geteiltes Gehäuse 1 mit einem Unterteil 2 sowie einem Oberteil 3 auf. Das Unterteil 2 und das Oberteil 3 sind über Flansche 10 miteinander verschraubt, wobei sich an der Kontaktstelle von Unterteil 2 und Oberteil 3 eine horizontale Teilfuge 4 ausbildet.

Weiter weist der Einwellenverdichter 11 eine Rotorwelle 12 auf, die von dem Gehäuse 1 umgeben ist. Die Rotorwelle 12 weist Längsendbereiche auf, die jeweils von einem Lager 14 gelagert sind. Das Lager 14 ist in atmosphärischer Umgebung 13 angeordnet. Im Gehäuse 1 des Einwellenverdichters 11 befindet sich Prozessgas, welches mindestens unter einem Druck von 3 bar (Saugseite) steht.

Die Rotorwelle 12 ist gegen die Lager 14 jeweils mit einer Labyrinth Wellendichtung 16 abgedichtet. Zum Betreiben der beiden Wellendichtungen 16 weist der Einwellenverdichter 11 ein Sperrgassystem 15 auf.

Wie die FIGen 2 und 3 zeigen weisen die beiden Wellendichtungen 16 jeweils einen die Rotorwelle 12 umschließenden Labyrintheinsatz 21 auf, welcher drei jeweils durch Nuten bzw. Zwischenräume 27 axial unterbrochene, die Rotorwelle 12 umgebende Labyrinthe 25, nämlich ein Primär-34, ein Sekundär- 35 und ein Tertiärlabyrinth 36, aufweist.

Das Primärlabyrinth 34 dichtet prozessseitig und das Tertiärlabyrinth 36 dichtet lagerseitig ab, wobei das Sekundärlabyrinth 35 (axial) - jeweils getrennt über die Nut bzw. den Zwischenraum 27 - zwischen dem Primärlabyrinth 34 und dem Tertiärlabyrinth 36 angesiedelt ist.

Durch die dem Primärlabyrinth 34 immanenten Leckagerate strömt - wie mit Pfeilen 26 gekennzeichnet - das Prozessgas durch das Primärlabyrinth 34 in den Raum zwischen dem Primär-34 und dem Sekundärlabyrinth 35, d. h. in den Zwischenraum bzw. die Nut 27.

Zwischen dem Sekundärlabyrinth 35 und dem Tertiärlabyrinth 36, d. h. in der dortigen Nut 27, liegt Sperrgas, bevorzugt Stickstoff, via einer Sperrgaszuführung 32, 9, 18, 9, 17, 9, an.

Die Sperrgaszuführung sieht einen an dem Gehäuse 1 angeordnete Sperrgasanschluss 32 vor, über welchen Sperrgas, in diesem Fall Stickstoff, beispielsweise mit einem Druck von ca. 1,8 bar, zugeführt wird. Der Sperrgasanschluss 32 mündet via einer Bohrung 9 im Gehäuse 1 in einer Vorkammer 18, welche in einem den Labyrintheinsatz 21 konzentrisch umschließenden Zwischenring 22 ausgebildet ist. Diese Vorkammer 18 ist als Ringsegment teilweise in Umfangsrichtung umlaufend im Zwischenring 22 bzw. an einer Trennfuge zwischen dem Zwischenring 22 und dem Gehäuse 11 ausgebildet.

Von dort aus führt das Sperrgassystem weiter über eine weitere Bohrung 9 in eine Verteilerkammer 17, welche ringförmig umlaufend an einer Trennfuge zwischen den Zwischenring 22 und dem Labyrintheinsatz 21 liegt.

Über diesen Strömungsweg des Sperrgases bis hin zu dieser Verteilerkammer 17 verteilt sich das Sperrgas gleichmäßig in der Verteilerkammer 17, wobei es dort unter dem Druck von ca. 1,8 bar steht.

Ausgehend von dieser Verteilerkammer 17 führen mehrere radiale Bohrungen 9 im Labyrintheinsatz 21 jeweils in den Zwischenraum 27 zwischen dem Sekundärlabyrinth 35 und dem Tertiärlabyrinth 36, wodurch hier eine gleichmäßige Versorgung mit Sperrgas gewährleistet und eine Gassperre gebildet wird.

Der Druck des Sperrgases zwischen dem Sekundärlabyrinth 35 und dem Tertiärlabyrinth 36 ist dabei höher als der des Prozessgases zwischen dem Primär- 34 und dem Sekundärlabyrinth 35. Beispeisweise kann dort das Prozessgas unter einem Druck von ca. 1,5 bar stehen. Dadurch strömt - wie mit Pfeilen 26 gekennzeichnet - über das Sekundärlabyrinth 35 das Sperrgas in den Zwischenraum 27 zwischen dem Primär- 34 und dem Sekundärlabyrinth 35 und vermischt sich mit dem dort befindlichen Prozessgas. Ein Teil des Sperrgases entweicht - wie mit Pfeilen 26 gekennzeichnet - auch in die atmosphärische Umgebung 13.

Das Prozess-Sperrgas-Gemisch wird über eine Leckagesystem 9, 19, 9, 20, 9, 33 des Sperrgassystems 15 abgeführt. Den beiden Wellendichtungen 16 ist je ein solches Leckagesystem 9, 19, 9, 20, 9, 33 zugeordnet, welche in eine gemeinsame Fackelsammelleitung (nicht dargestellt) münden.

Das Leckagesystem führt ausgehend von dem Zwischenraum 27 zwischen dem Primär- 34 und dem Sekundärlabyrinth 35 über mehrere jeweils radial nach außen verlaufende, im Labyrintheinsatz 21 angebrachte Bohrungen 9 in eine Verteilerkammer 19, welche ringförmig in Umfangsrichtung umlaufend, an der Trennfuge zwischen dem Labyrintheinsatz 21 und dem Zwischenring 22 ausgebildet ist.

Von dort führt eine in dem Zwischenring verlaufende Bohrung 9 in eine Vorkammer 20, welche als Ringsegment teilweise in Umfangsrichtung umlaufend in dem Zwischenring 22 bzw. an einer Trennfuge zwischen dem Zwischenring 22 und dem Gehäuse 11 ausgebildet ist.

Durch diesen Strömungsweg wird gewährleistet, dass das Prozess-Sperrgas-Gemisch aus dem Zwischenraum 27 zwischen dem Primär- 34 und dem Sekundärlabyrinth 35 gleichmäßig abgeführt wird.

Über eine Bohrung 9 gelangt das Prozess-Sperrgas-Gemisch weiter in einen Entsorgungsanschluss 33, welcher an die gemeinsame Fackelsammelleitung angeschlossen ist. Solange hier das Prozess-Sperrgas-Gemisch einen Druck größer als den atmosphärischen Umgebungsdruck aufweist, kann auf eine Absaugung verzichtet werden, ansonsten wäre hier gegebenenfalls eine Absaugung vorzusehen.

Bei dem Einwellenverdichter ist dieses Sperrgassystem 15 der beiden Wellendichtungen 16 als Abdichtung der Teilfuge 4 auf diese erweitert. D. h., die Abdichtung der Teilfuge 4 ist an das jeweilige Sperrgassystem 15 der beiden Wellendichtungen 16 angeschlossen bzw. gekoppelt, wodurch die Abdichtung der Teilfuge 4 nach dem Sperrgasprinzip wie in den beiden Wellendichtungen 16 erfolgt.

Dazu weist, wie die FIGen 1 bis 3 zeigen, der Flansch 10 des Unterteils 2 an seiner in Richtung zur Teilfuge 4 gerichteten Oberfläche eine eingefräste Nut 7, eine Entsorgungsnut 7, auf, welche über Zuführungen 8, 23, 24 an das Leckagesystem der Sperrgassysteme 15 der beiden Wellendichtungen 16 gekoppelt ist.

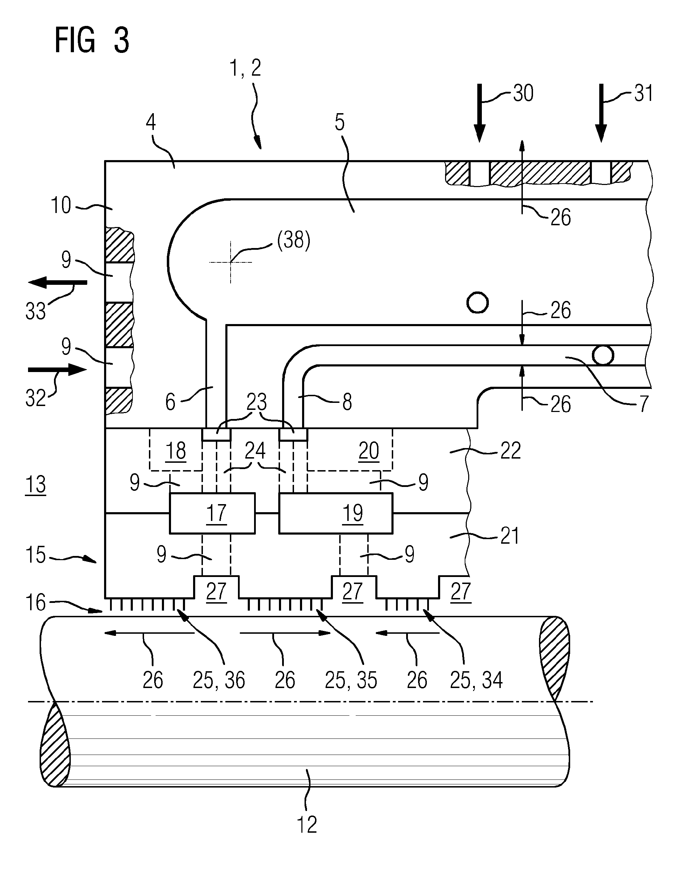

Diese Zuführungen - wie FIG 3 im Detail für eine Wellendichtung 16 zeigt- erfolgen dabei jeweils über einen in der Teilfuge 4 bzw. in dem Flansch 10 des Unterteils angeordneten, an die Entsorgungsnut 7 angebundenen Kanal 8. Dieser Kanal 8 mündet in eine ringförmig umlaufende Nut 23, welche in dem Zwischenring 22 bzw. an der Trennfuge zwischen dem Zwischenring 22 und dem Gehäuse 11 angeordnet ist. Von dort aus führt eine in dem Zwischenring 22 angebrachte, dort im Bereich der Teilfuge 4 liegende Nut 24 zur Verteilerkammer 19 des Leckagesystems des Sperrgassystems 15, wodurch die Anbindung der Entsorgungsnut 7 an das Leckagesystem bzw. an das Sperrgassystem 15 realisiert ist.

Die beiden Nuten 23 und 24 dieser Zuführung sind dabei als Drossel bzw. Blenden ausgebildet, über welche sich Druck und Menge des Prozess-Sperrgas-Gemisches in der Entsorgungsnut 7 und der Verteilerkammer 19 einstellen bzw. angleichen lassen.

Eine weitere zum Teil schon vorhandene Nut 5 im Flansch des Unterteils 2, welcher vorhandene Teil aus der Verschraubung von Ober- 3 und Unterteil 2 des Gehäuses 1 mittels in Bohrungen 9 verschraubten Bolzen 38 resultiert, ist über Gasversorgungsleitungen 6 an die Gassperre der Sperrgassysteme 15 der beiden Wellendichtungen 16 gekoppelt und wirkt dabei als entsprechende Gassperre in der Teilfuge 4.

Diese Kopplungen erfolgen jeweils - ausgehend von der Gasversorgungsleitung 6 - über eine ringförmig umlaufende Nut 23, welche in dem Zwischenring 22 bzw. an der Trennfuge zwischen dem Zwischenring 22 und dem Gehäuse 11 angeordnet ist. Von dort aus führt eine in dem Zwischenring 22 angebrachte, dort im Bereich der Teilfuge 4 liegende Nut 24 zur Verteilerkammer 17 des Sperrgases bzw. des Sperrgassystems 15, wodurch die Anbindung der Nut 5 an die Gassperre bzw. an das Sperrgassystem 15 realisiert ist.

Die beiden Nuten 23 und 24 diese Kopplung sind dabei ebenfalls als Drossel bzw. Blenden ausgebildet, über welche sich Druck und Menge des Sperrgases in der Nut 5 und der Verteilerkammer 17 einstellen bzw. angleichen lassen.

Die Druckverhältnisse von Sperrgas in der Nut 5 sowie dem Prozess-Sperrgas-Gemisch in der Entsorgungsnut 7 entsprechen denen in der Wellendichtung, sodass - wie mit Pfeilen 26 gekennzeichnet - auch hier, d. h. in der Teilfuge 4 die Gassperre ausgebildet ist, wobei Sperrgas über die Teilfuge 4 in die atmosphärische Umgebung 13 austreten sowie in die Entsorgungsnut 7 strömen kann 26.

Durch die auch hier immanente Leckagerate des Prozessgases strömt - wie mit Pfeilen 26 gekennzeichnet - das Prozessgas über die Teilfuge 4 in die Entsorgungsnut 7, wird aber von dort über die Entsorgungsnut 7 und dem Entsorgungssystem des Sperrgassystems 15 der gemeinsame Fackelsammelleitung zugeführt.

Wie weiter die FIGen 2 und 3 zeigen, sieht der Einwellenverdichter zwei Spülgasanschlüsse 30, 31 - in Form von Bohrungen - an dem Unterteil 2 des Gehäuses 1 vor, welche in die Nut 5 sowie in die Entsorgungsnut 7 münden.

Über den Spülgasanschluss 30 kann zusätzlich zum Sperrgas trockenes Spülgas, beispielsweise ebenfalls Stickstoff, in die Nut 5 bzw. damit in die Teilfuge 4 eingespeist werden, wodurch Feuchtigkeitsansammlungen im Bereich der Teilfuge 4 vor Inbetriebnahme des Einwellenverdichters 11 vermieden werden können. Entsprechend kann über den Spülgasanschluss 31 zusätzlich zur Entsorgung des Prozess-Sperrgas-Gemisches ebenfalls trockenes Spülgas, wie Stickstoff, in die Entsorgungsnut 7 bzw. damit auch in die Teilfuge 4 eingespeist werden zur Vermeidung der Feuchtigkeitsansammlungen und auch zu einer Einstellung einer gewollten Gasströmung in der Entsorgungsnut - hin zum Entsorgungsanschluss 33.

## Patentansprüche

1. Teilbares Gehäuse (1) für eine Fluidmaschine (11), mit einem ersten Gehäuseelement (2) und einem mit dem ersten Gehäuseelement (2) über eine Teilfuge (4) verbundenen, zweiten Gehäuseelement (3) sowie mit einer ein mit Sperrgas betriebenes Sperrgassystem (15) aufweisenden Wellendichtung (16), wobei das erste und/oder das zweite Gehäuseelement (2, 3) im Bereich der Teilfuge (4)
- mindestens eine Nut (5) sowie mindestens eine mit der mindestens einen Nut (5) verbundene Gasversorgungsleitung (6) oder Gasversorgungsanschluss (6), welche Gasversorgungsleitung (6) oder welcher Gasversorgungsanschluss (6) mit dem Sperrgassystem (15) verbunden ist, wodurch die mindestens eine Nut (5) mit dem Sperrgas des Sperrgassystems (15) der Wellendichtung (16) versorgbar ist, aufweist bzw. aufweisen,
**dadurch gekennzeichnet, dass**
das erste und/oder das zweite Gehäuseelement im Bereich der Teilfuge
- eine weitere Nut (7) sowie eine mit der weiteren Nut (7) verbundene Gasversorgungsleitung (31) oder Gasversorgungsanschluss (31), wodurch die weitere Nut zusätzlich mit einem Spülgas versorgbar ist,
aufweist bzw. aufweisen.

2. Teilbares Gehäuse (1) nach mindestens einem der voranstehenden Ansprüche,
**dadurch gekennzeichnet, dass**
das erste (2) Gehäuselement ein (Gehäuse-)Unterteil und/oder das zweite Gehäuseelement (3) ein (Gehäuse-)Oberteil sind bzw. ist und/oder dass die mindestens eine Nut (5) und/oder die mit der mindestens einen Nut (5) verbundene Gasversorgungsleitung (6) oder Gasversorgungsanschluss (6) in dem (Gehäuse-)Unterteil (2) angeordnet ist bzw. sind.

3. Teilbares Gehäuse (1) nach mindestens einem der voranstehenden Ansprüche, **dadurch gekennzeichnet, dass** das Sperrgas ein Inertgas ist.

4. Teilbares Gehäuse (1) nach mindestens einem der voranstehenden Ansprüche,
**dadurch gekennzeichnet, dass**
die mindestens eine Nut (5) mit einer weiteren Gasversorgungsleitung (30) oder Gasversorgungsanschluss (30) verbunden ist, wodurch die mindestens eine Nut (5) zusätzlich mit einem, insbesondere trockenen, Spülgas, insbesondere einem Inertgas, versorgbar ist.

5. Teilbares Gehäuse (1) nach mindestens einem der voranstehenden Ansprüche,
**dadurch gekennzeichnet, dass**
die weitere Nut (7) mindestens eine mit der weiteren Nut (7) verbundene Ableitung (8) und/oder Zuleitung (8) aufweist, wodurch die weitere Nut (7) an ein Entsorgungssystem des Sperrgassystems (15) der Wellendichtung (16), insbesondere an eine "Safe-Location" oder an eine Abgaskolonne, anschließbar ist.

6. Teilbares Gehäuse (1) nach mindestens einem der voranstehenden Ansprüche,
**dadurch gekennzeichnet, dass**
das Spülgas ein Inertgas ist.

7. Teilbares Gehäuse (1) nach mindestens einem der voranstehenden Ansprüche,
**dadurch gekennzeichnet, dass**
die mindestens eine Nut (5) unter Verwendung der mindestens einen mit der mindestens einen Nut (5) verbundenen Gasversorgungsleitung (6) oder Gasversorgungsanschluss (6) mit einer Luftsperre des Sperrgassystems (15) bei einer Labyrinth Wellendichtung (16) verbunden ist.

8. Teilbares Gehäuse (1) nach mindestens einem der voranstehenden Ansprüche,
**dadurch gekennzeichnet, dass**
mit der mindestens einen Nut (5) und/oder der weiteren Nut (7) eine als Drossel oder Blende wirkende Nut (23, 24) gekoppelt ist, unter Verwendung welcher als Drossel oder Blende wirkenden Nut (23, 24) ein Druck und/oder eine Menge eines in der Nut (5) und/oder in der weiteren Nut (7) strömenden Gases kontrolliert, reguliert, angepasst und/oder eingestellt werden kann.

9. Teilbares Gehäuse (1) nach mindestens einem der voranstehenden Ansprüche,
**dadurch gekennzeichnet, dass**
die Wellendichtung (16) eine Rotorwelle (12) der Fluidmaschine (11), insbesondere eines Einwellenverdichters (11), gegenüber dem Gehäuse (1) und/oder einem Lager (14) der Rotorwelle (12), insbesondere unter Verwendung des Sperrgassystems (15), abdichtet.

10. Einwellenverdichter (11) mit einem Gehäuse (1) nach mindestens einem der voranstehenden Ansprüche, wobei eine Rotorwelle (12) des Einwellenverdichters (11) in dem Gehäuse (1) gelagert und die Rotorwelle (12) unter Verwendung der Wellendichtung (16), insbesondere einer Labyrinth Wellendichtung (16), mit dem Sperrgassystem (15) gegenüber dem Gehäuse (1) abgedichtet ist.

## Claims

1. Divisible casing (1) for a fluid machine (11), having a first casing element (2) and a second casing element (3) which is connected to the first casing element (2) via a parting joint (4), and a shaft seal (16) having a seal gas system (15) which is operated with seal gas,
wherein
the first and/or the second casing element (2, 3) has/have, in the region of the parting joint (4),
at least one groove (5) and at least one gas supply line (6) or gas supply connection (6) connected to the at least one groove (5), which gas supply line (6) or gas supply connection (6) is connected to the seal gas system (15), whereby the at least one groove (5) can be supplied with the seal gas of the seal gas system (15) of the shaft seal (16),
**characterized in that**
the first and/or the second casing element has/have, in the region of the parting joint,
a further groove (7) and a gas supply line (31) or gas supply connection (31) connected to the further groove (7), whereby the further groove can additionally be supplied with a purge gas.

2. Divisible casing (1) according to Claim 1, **characterized in that**
the first casing element (2) is a lower (casing) part and/or the second casing element (3) is an upper (casing) part, and/or that the at least one groove (5) and/or the gas supply line (6) or gas supply connection (6) connected to the at least one groove (5) is or are arranged in the lower (casing) part (2).

3. Divisible casing (1) according to at least one of the preceding claims, **characterized in that**
the seal gas is an inert gas.

4. Divisible casing (1) according to at least one of the preceding claims, **characterized in that**
the at least one groove (5) is connected to a further gas supply line (30) or gas supply connection (30), whereby the at least one groove (5) can additionally be supplied with a purge gas, in particular a dry purge gas, in particular an inert gas.

5. Divisible casing (1) according to at least one of the preceding claims, **characterized in that**
the further groove (7) has at least one outlet line (8) and/or inlet line (8) connected to the further groove (7), whereby the further groove (7) can be connected to a disposal system of the seal gas system (15) of the shaft seal (16), in particular to a "safe location" or to a waste gas column.

6. Divisible casing (1) according to at least one of the preceding claims, **characterized in that**
the purge gas is an inert gas.

7. Divisible casing (1) according to at least one of the preceding claims, **characterized in that**
the at least one groove (5) is connected, by means of the at least one gas supply line (6) or gas supply connection (6) connected to the at least one groove (5), to an air barrier of the seal gas system (15) in a labyrinth shaft seal (16).

8. Divisible casing (1) according to at least one of the preceding claims, **characterized in that**
a groove (23, 24) acting as a throttle or a diaphragm is coupled to the at least one groove (5) and/or the further groove (7), by means of which groove (23, 24) acting as a throttle or a diaphragm it is possible to control, regulate, adapt and/or set a pressure and/or a quantity of a gas flowing into the groove (5) and/or into the further groove (7).

9. Divisible casing (1) according to at least one of the preceding claims, **characterized in that**
the shaft seal (16) seals a rotor shaft (12) of the fluid machine (11), in particular of a single-spool compressor (11), with respect to the casing (1) and/or a bearing (14) of the rotor shaft (12), in particular by means of the seal gas system (15).

10. Single-spool compressor (11) having a casing (1) according to at least one of the preceding claims, wherein a rotor shaft (12) of the single-spool compressor (11) is mounted in the casing (1) and the rotor shaft (12) is sealed with respect to the casing (1) by means of the shaft seal (16), in particular a labyrinth shaft seal (16), having the seal gas system (15).

## Revendications

1. Carter ( 1 ) divisible pour une machine ( 11 ) fluidique, comprenant un premier élément ( 2 ) de carter et un deuxième élément ( 3 ) de carter relié au premier élément ( 2 ) de carter par un joint ( 4 ), ainsi qu'une étanchéité ( 16 ) d'arbre ayant un système ( 15 ) fonctionnant par gaz de barrage,
dans lequel le premier et/ou le deuxième élément ( 2, 3 ) de carter a ou ont dans la région du joint ( 4 )
- au moins une rainure ( 5 ), ainsi qu'au moins un conduit ( 6 ) d'alimentation en gaz ou un raccord ( 6 ) d'alimentation en gaz communiquant avec la au moins une rainure ( 5 ), lequel conduit ( 6 ) d'alimentation en gaz ou raccord ( 6 ) d'alimentation en gaz communique avec le système ( 1 ) à gaz de barrage, de sorte que la au moins une rainure ( 5 ) peut être alimentée en le gaz de barrage du système ( 15 ) à gaz de barrage de l'étanchéité ( 16 ) d'arbre,
**caractérisé en ce que**
le premier et/ou le deuxième élément de carter a ou ont
- une autre rainure ( 7 ), ainsi qu'un conduit ( 31 ) d'alimentation en gaz ou un raccord ( 31 ) d'alimentation en gaz communiquant avec l'autre rainure ( 7 ), de manière à pouvoir alimenter l'autre rainure supplémentairement en un gaz de balayage.

2. Carter ( 1 ) divisible suivant au moins l'une des revendications précédentes,
**caractérisé en ce que**
le premier élément ( 2 ) de carter est une partie inférieure de carter et/ou le deuxième élément ( 3 ) de carter est une partie supérieure de carter ou inversement et/ou la au moins une rainure ( 5 ) et/ou le conduit ( 6 ) d'alimentation en gaz ou le raccord ( 6 ) d'alimentation en gaz communiquant avec la au moins une rainure ( 5 ) est ou sont disposés dans la partie ( 2 ) inférieure de carter.

3. Carter ( 1 ) divisible suivant au moins l'une des revendications précédentes,
**caractérisé en ce que**
le gaz de barrage est un gaz inerte.

4. Carter ( 1 ) divisible suivant au moins l'une des revendications précédentes,
**caractérisé en ce que**
la au moins une rainure ( 5 ) communique avec un autre conduit ( 30 ) d'alimentation en gaz ou un autre raccord ( 30 ) d'alimentation en gaz, de manière à pouvoir alimenter la au moins une rainure ( 5 ) supplémentairement en un gaz de balayage, notamment sec, notamment en un gaz inerte.

5. Carter ( 1 ) divisible suivant au moins l'une des revendications précédentes,
**caractérisé en ce que**
l'autre rainure ( 7 ) a au moins un conduit ( 8 ) d'évacuation et/ou un conduit ( 8 ) d'apport communiquant avec l'autre rainure ( 7 ), de manière à pouvoir raccorder l'autre rainure ( 7 ) à un système de vidange du système ( 15 ) à gaz de barrage de l'étanchéité ( 16 ) d'arbre, notamment à une "Safe-Location" ou à une colonne de gaz perdu.

6. Carter ( 1 ) divisible suivant au moins l'une des revendications précédentes,
**caractérisé en ce que**
le gaz de balayage est un gaz inerte.

7. Carter ( 1 ) divisible suivant au moins l'une des revendications précédentes,
**caractérisé en ce que**
la au moins une rainure ( 5 ) communique, en utilisant la au moins un conduit ( 6 ) d'alimentation en gaz ou le raccord ( 6 ) d'alimentation en gaz communiquant avec la au moins une rainure ( 5 ), avec un barrage d'air du système ( 15 ) à gaz de barrage pour une étanchéité ( 16 ) d'arbre en labyrinthe.

8. Carter ( 1 ) divisible suivant au moins l'une des revendications précédentes,
**caractérisé en ce que**
à la au moins une rainure ( 5 ) et/ou à l'autre rainure ( 7 ) est reliée une rainure ( 23, 24 ) agissant comme étranglement ou comme diaphragme par l'utilisation de cette rainure ( 23, 24 ) agissant comme étranglement ou comme diaphragme, une pression et/ou une quantité d'un gaz passant dans la rainure ( 5 ) et/ou dans l'autre rainure ( 7 ) peut être contrôlée, régulée, adaptée et/ou réglée.

9. Carter ( 1 ) divisible suivant au moins l'une des revendications précédentes,
**caractérisé en ce que**
l'étanchéité ( 16 ) d'arbre rend étanche un arbre ( 12 ) rotorique de la machine ( 11 ) fluidique, notamment d'un compresseur ( 11 ) à un seul arbre par rapport au carter et/ou par rapport à un palier ( 14 ) de l'arbre ( 12 ) rotorique, en utilisant notamment le système ( 15 ) à gaz de barrage.

10. Compresseur ( 11 ) à un seul arbre, comprenant un carter ( 1 ) suivant au moins l'une des revendications précédentes, dans lequel un arbre ( 12 ) rotorique du compresseur ( 11 ) à un seul arbre est monté dans le carter ( 1 ) et l'arbre ( 12 ) rotorique est rendu étanche par rapport au carter ( 1 ) par le système ( 15 ) à gaz de barrage en utilisant l'étanchéité ( 16 ) d'arbre, notamment une étanchéité ( 16 ) d'arbre à labyrinthe.
